# EUROPÄISCHE PATENTSCHRIFT

(11) **EP 2 157 556 B1**
(45) Veröffentlichungstag und Bekanntmachung des Hinweises auf die Patenterteilung: **06.04.2011**
(21) Anmeldenummer: 08162852.1
(22) Anmeldetag: 22.08.2008
(51) Int. Cl.: G08B 5/38, H05B 37/02, H05B 33/08, B64D 47/06

(54) **Navigationsbeleuchtungsvorrichtung für ein Luftfahrzeug, insbesondere Militärflugzeug**
Navigational lighting system for an airplane, in particular for military aircraft
Dispositif d'éclairage de navigation pour un aéronef, en particulier un avion militaire

(43) Veröffentlichungstag der Anmeldung: 24.02.2010
(73) Patentinhaber: Goodrich Lighting Systems GmbH, 59557 Lippstadt (DE)
(72) Erfinder: Röbke, Steffen, 33098 Paderborn (DE); Hüntelmann, Andreas, 59597 Erwitte (DE); Trinscheck, Robert, 59067 Hamm (DE)
(74) Vertreter: von Kreisler Selting Werner

(56) Entgegenhaltungen:
- EP-A- 0 736 453
- EP-A- 1 336 943
- JP-A- 2001 138 804

## Beschreibung

Die Erfindung betrifft eine Navigationsbeleuchtungsvorrichtung für ein Luftfahrzeug, bei dem es sich insbesondere um ein militärisches Luftfahrzeug und vorzugsweise um ein Militärflugzeug handelt.

Luftfahrzeuge verfügen über eine Navigationsbeleuchtung, die der besseren Erkennung eines Luftfahrzeuges durch andere Luftfahrzeuge dient (siehe z. B. EP-A-0 736 453). Während bei zivilen Luftfahrzeugen die Navigationsbeleuchtung im Wesentlichen in einem einzigen Betriebsmodus arbeitet, kann die Navigationsbeleuchtung von Militär-Luftfahrzeugen in mehreren Modi (z.B. Fremd/Feind-Erkennung) betrieben werden.

Um bei Militär-Luftfahrzeugen die Navigationsbeleuchtung in einem der möglichen Betriebsmodi betreiben zu können, bedarf es neben der Energieversorgung im Regelfall weiterer Steuerleitungen, was mit einem zusätzlichen Verdrahtungsaufwand verbunden ist. Dies ist insbesondere dann von Nachteil, wenn existierende Luftfahrzeuge mit einem modernen Navigationsbeleuchtungssystem ausgerüstet werden sollen. Ferner ist darauf zu achten, dass die Ansteuerung der Navigationsbeleuchtung unempfindlich gegen elektromagnetische Störungen ist und selbst auch keine elektromagnetische Störungen verursacht.

Aus EP-A-1 336 943, die alle Merkmale des Oberbegriffs des Anspruchs 1 offenbart, ist es bekannt, die Ansteuerung einer Warnlichtvorrichtung eines Flugzeuges über den Energieversorgungsbus und kodiert zu realisieren,

Aufgabe der Erfindung ist es, eine Navigationsbeleuchtungsvorrichtung für ein Luftfahrzeug, insbesondere ein militärisches Luftfahrzeug und vorzugsweise ein Militärflugzeug zu schaffen, wobei die Navigationsbeleuchtungsvorrichtung weitestgehend bezüglich elektromagnetischer Störungen unempfindlich ist.

Zur Lösung dieser Aufgabe wird mit der Erfindung eine Navigationsbeleuchtungsvorrichtung für ein Luftfahrzeug, insbesondere Militärflugzeug, vorgeschlagen, wobei die Navigationsbeleuchtungsvorrichtung versehen ist mit den Merkmalen des Anspruchs 1.

Die erfindungsgemäße Navigationsbeleuchtungsvorrichtung weist mehrere Navigationsleuchteinheiten mit Navigationsleuchten auf, die beispielsweise außen am Luftfahrzeug entsprechend den gesetzlichen Bestimmungen bzw. den militärischen Anforderungen angeordnet sind. Die Navigationsleuchteinheiten werden von einer Energieversorgungseinheit mit der für ihren Betrieb erforderlichen Energie versorgt. Über eine zentrale Ansteuereinheit, die beispielsweise vom Cockpit aus bedient werden kann, werden die Navigationsleuchteinheiten in jeweils einem von mehreren Betriebsmodi angesteuert.

Jede Navigationsleuchteinheit der erfindungsgemäßen Navigationsbeleuchtungsvorrichtung ist mit einer Steuereinheit zur Ansteuerung der Navigationsleuchte versehen, und zwar entsprechend dem Betriebsmodus, wie er über die zentrale Ansteuereinheit vorgegeben ist. Erfindungsgemäß werden nun die Navigationsleuchteinheiten für den Betrieb in einem Betriebsmodus von der Ansteuereinheit zeitlich versetzt angesteuert, und zwar in einer vorgegebenen Reihenfolge sequentiell und damit mit Zeitversatz. Die zeitliche Differenz zwischen jeweils zwei aufeinanderfolgend angesteuerten Navigationsleuchteinheiten ist dabei bekannt und gleich oder ungleich und insbesondere jeweils im wesentlichen gleich. Die Steuereinheiten der Navigationsleuchteinheiten sind mit Zeitverzögerungsgliedern zur zeitlichen Verzögerung der Ansteuerung der Navigationsleuchten auf den Empfang eines Ansteuersignals der zentralen Ansteuereinheit hin versehen. Die Zeitverzögerungsglieder können in Soft- und/oder Hardware realisiert sein; die Steuereinheiten sowie die zentrale Ansteuereinheit weisen neben Hardware-Komponenten auch Software auf. Erfindungsgemäß sind die Zeitverzögerungsglieder der Steuereinheiten der einzelnen Navigationsleuchteinheiten derart aufeinander abgestimmt, dass die Navigationsleuchte einer Navigationsleuchteinheit (frühestens) erst dann angesteuert wird, wenn die letzte der sequentiell angesteuerten Navigationsleuchteinheiten von der zentralen Ansteuereinheit ihr Ansteuersignal empfangen hat. Mit anderen Worten ist also die Zeitverzögerung des Zeitverzögerungsgliedes der ersten angesteuerten Navigationsleuchteinheit am längsten, während das Zeitverzögerungsglied der während einer Ansteuerungssequenz zuletzt angesteuerten Navigationsleuchteinheit die kürzest eingestellte Zeitverzögerung aufweist, die insbesondere Null sein kann aber nicht sein muss.

Durch den zeitlichen Versatz der Ansteuerung sämtlicher Navigationsleuchteinheiten wird die elektromagnetische Verträglichkeit der Navigationsbeleuchtungsvorrichtung verbessert, so dass zur Einhaltung der gesetzlichen bzw. militärisch gewünschten EMV-Anforderungen ein geringerer Aufwand betrieben werden muss. Insbesondere gilt dies für Luftfahrzeuge, bei denen in Ermangelung einer Steuerleitung die Ansteuerung der Navigationsleuchteinheiten durch die zentrale Ansteuereinheit über die Energieversorgungsleitungen und gegebenenfalls insbesondere über das Gehäuse bzw. die Außenhaut des Luftfahrzeuges erfolgen muss, wenn dieses bzw. diese als gemeinsames Massepotential genutzt wird, was insbesondere bei älteren (Militär-)Flugzeugen der Fall sein kann. Somit können auch diese älteren Flugzeuge mit geringem Aufwand bezüglich ihrer Navigationsbeleuchtung modernisiert werden.

Je nach Luftfahrzeugtyp können die Navigationsleuchteinheiten in mehrere Gruppen von jeweils mindestens zwei Navigationsleuchteinheiten unterteilt werden. Bei einem als Schwenkflügler ausgebildeten (Militär-)Flugzeug existieren beispielsweise zwei Navigationsleuchten an den Enden der Tragflächen, zwei Navigationsleuchten im Bereich der Triebwerkseinläufe und zwei Navigationsleuchten an dem Höhen- bzw. Seitenleitwerk. Bei einer derartigen Konstellation existieren dann also drei Gruppen von Navigationsleuchteinheiten mit jeweils zwei Navigationsleuchten und zugehörigen Steuereinheiten, wobei die drei Gruppen sequentiell angesteuert werden. Innerhalb der Navigationsleuchten einer Gruppe von Navigationsleuchteinheiten kommt es bei der Ansteuerung untereinander zu keinem zeitlichem Versatz.

Die Zeitdifferenz zwischen der mit den Verzögerungsgliedern der Steuereinheiten jeweils zweier Navigationsleuchteinheiten eingestellten Zeitverzögerungen sind gleich dem Zeitversatz zwischen den Zeitpunkten der Ansteuerung der Steuereinheiten der zwei betreffenden Navigationsleuchteinheiten durch die Ansteuereinheit. Hierbei kann also dann das Ansteuersignal für die letzte während einer Sequenz angesteuerte Navigationsleuchteinheit von deren Steuereinheit vorzugsweise direkt und ohne gewollte Zeitverzögerung zur Ansteuerung der Navigationsleuchte durchgeschaltet.

In vorteilhafter Weiterbildung der Erfindung ist ferner vorgesehen, dass die Ansteuersignale der zentralen Ansteuereinheit zur Codierung Binärdaten umfassen, die durch kurzzeitige Unterbrechung der Energieversorgungsleitung einer Navigationsleuchteinheit erzeugbar sind, wobei die Dauer der Unterbrechung den Binärzustand angibt, wobei die Navigationsleuchteinheiten Energiespeicher zur Versorgung ihrer Navigationsleuchten während der Unterbrechung der Energieversorgung aufweisen.

Um die unterschiedliche Ansteuerung der Navigationsleuchten entsprechend dem jeweils gewählten Betriebsmodus nicht dezentral in jeder Navigationsleuchteinheit ablegen zu müssen sowie aus Gründen der erhöhten Sicherheit gegen Störungen ist es zweckmäßig, wenn die zentrale Ansteuereinheit während der gesamten Dauer des Betriebs der Navigationsbeleuchtungsvorrichtung die Navigationsleuchteinheiten während ein und desselben Betriebsmodus wiederholt sequentiell ansteuert. Dies gilt insbesondere dann, wenn die Navigationsleuchten blitzlichtartig in einem vorgegebenen Blitzlichtmuster leuchten sollen. Ferner hat dieses Verfahren den Vorteil, dass dann, wenn eine Navigationsleuchteinheit bzw. deren Steuereinheit den Code für einen Betriebsmodus nicht sogleich erkennen sollte, dieser Code zeitlich hintereinander immer wieder (für alle Navigationsleuchteinheiten) von der Ansteuereinheit ausgesendet wird. Erst dann, wenn die Steuereinheit einer Navigationsleuchteinheit für eine vorgegebene Zeitspanne (Maximalzeitspanne) einen gültigen Code in den Ansteuersignalen der Ansteuereinheit nicht erkennt, arbeitet die betreffende Navigationsleuchteinheit vorzugsweise in dem dem zuletzt erkannten Code entsprechenden Betriebsmodus.

Neben der Navigationsbeleuchtungsvorrichtung betrifft die Erfindung ferner auch ein Luftfahrzeug, insbesondere ein Militärflugzeug, mit einem metallischen Gehäuse und einer Navigationsbeleuchtungsvorrichtung nach einem der vorhergehenden Ausführungsbeispielen, wobei die Navigationsleuchteinheiten an dem Gehäuse angeordnet sind.

Die Erfindung wird nachfolgend anhand eines Ausführungsbeispiels und unter Bezugnahme auf die Zeichnung näher erläutert. Im einzelnen zeigen dabei:
- Fig. 1: schematisch ein Schwenkflügel-Militärflugzeug in Draufsicht zur Ver- deutlichung der Anordnung der Navigationsbeleuchtung bei diesem Flugzeugtyp und
- Fig. 2: schematisch die Hauptkomponenten des Steuerungssystems zur An- steuerung der Navigationsbeleuchtung des Flugzeuges nach Fig. 1 in jeweils einem von mehreren möglichen Betriebsmodi.

Die Erfindung wird nachfolgend anhand der Navigationsbeleuchtung eines Schwenkflüglers beschrieben. Es sei an dieser Stelle aber ausdrücklich hervorgehoben, dass die Erfindung nicht auf die Anwendung auf Navigationsbeleuchtungen für Schwenkflügler beschränkt ist. Die Erfindung ist überall dort einsetzbar, wo bei einem Luftfahrzeug mehr als zwei Navigationsleuchten vorhanden sind. Bei einem derartigen Navigationsbeleuchtungssystem können die mehreren Navigationsleuchten sequentiell in vorgegebenen zeitlichen Abständen untereinander angesteuert werden, wobei dennoch erreicht wird, dass die Aktivierung der Navigationsleuchten trotz zeitlich versetzter, sequentieller Ansteuerung gleichzeitig erfolgt.

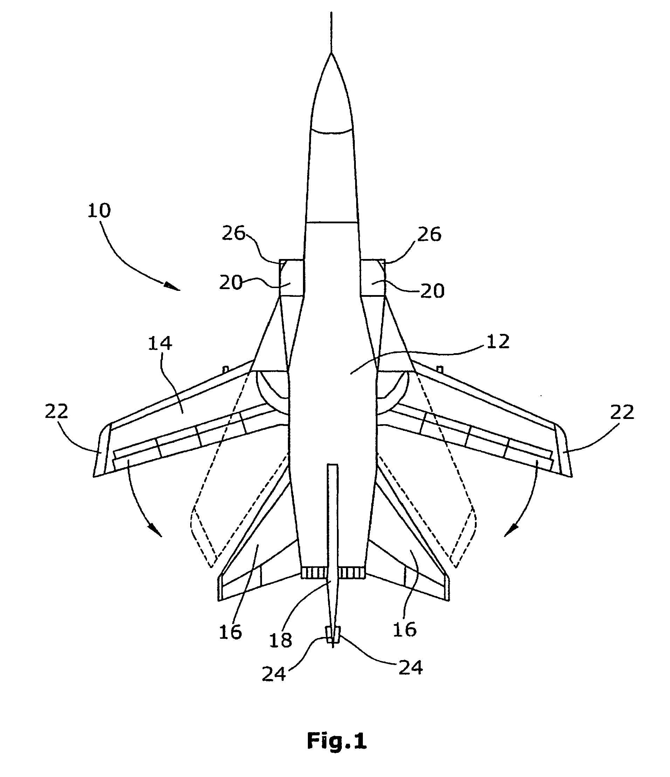

Fig. 1 zeigt in Draufsicht ein als Schwenkflügler ausgebildetes Militärflugzeug 10, dessen Außenhaut unter anderem vom Rumpf 12, den Tragflächen 14 und dem Höhen- und Seitenleitenwerk 16,18 gebildet ist. Am Rumpf 12 sind zwei Triebwerke angeordnet, deren Einläufe bei 20 dargestellt sind.

Dieses Flugzeug 10 weist insgesamt sechs Navigationsleuchten auf, wobei zwei Navigationsleuchteinheiten 22 an den Enden der Tragflächen 14, zwei Navigationsleuchteinheiten 24 an dem Seitenleitwerk 18 und zwei Navigationsleuchteinheiten 26 an den Einläufen 20 der Triebwerke angeordnet sind. Dabei können die Navigationsleuchteinheiten 22 an den Enden der Tragflächen 14 separat abgeschaltet werden, was aber für die Erfindung keine Bedeutung hat.

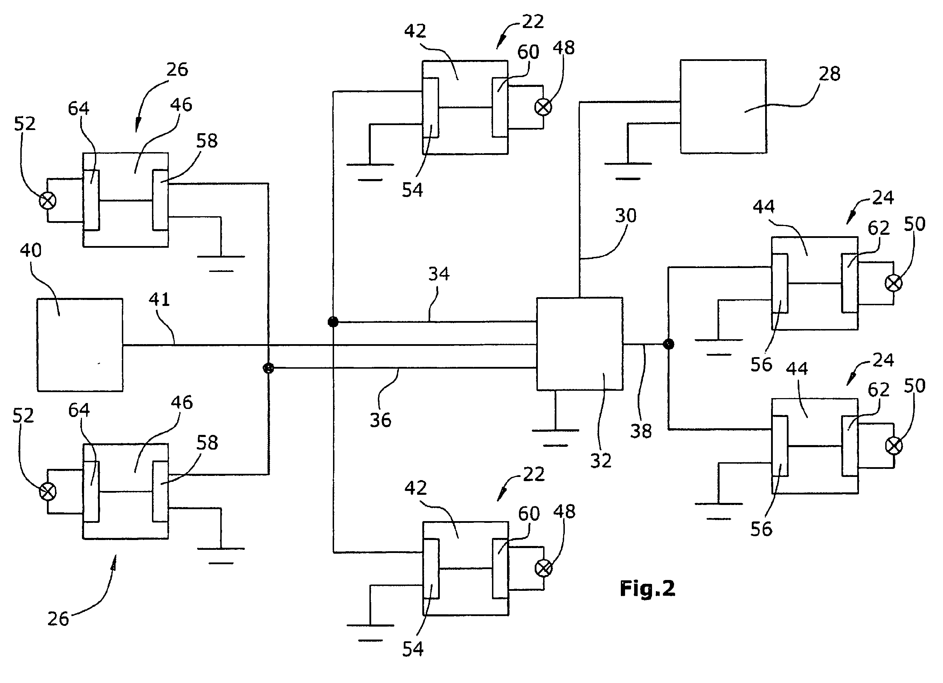

Die Versorgung der einzelnen Navigationsleuchteinheiten mit der für ihren Betrieb erforderlichen Energie erfolgt durch eine Energieversorgungseinheit 28, die über eine Energieversorgungsleitung 30 mit einer zentralen Ansteuereinheit 32 verbunden ist, von der aus sich weitere Energieversorgungsleitungen 34,36,38 zu den zwei Navigationsleuchteinheiten 22, den beiden Navigationsleuchteinheiten 26 und den beiden Navigationsleuchteinheiten 24 erstrecken. Sämtliche Navigationsleuchteinheiten sind über die Außenhaut, also das metallische Gehäuse des Flugzeuges 10 als Masse mit der Energieversorgungseinheit 28 wiederum verbunden. Dieses Energieversorgungsnetz, das auch zur Ansteuerung der Navigationsleuchteinheiten benutzt wird, ist in Fig. 2 näher beschrieben.

Die zentrale Ansteuereinheit 32 wird von einem Steuerpult 40 aus bedient, das sich im Cockpit befindet und vom Piloten bzw. Copiloten bedient wird sowie über eine Steuerleitung 41 mit der zentralen Ansteuereinheit 32 verbunden ist. Über das Steuerpult 40 können die Navigationsleuchteinheiten in einem von mehreren Betriebsmodi betrieben werden. Zu diesen Modi zählt beispielsweise der Betrieb der Navigationsleuchteinheiten mit sichtbarem Licht (und zwar entweder gedimmt oder ungedimmt) und mit IR-Licht (wiederum entweder gedimmt oder ungedimmt) sowie als Blitzlicht (sichtbares Licht oder IR-Licht). Die Codierung des vom Cockpit aus vorgegebenen Betriebsmodus erfolgt in der zentralen Ansteuereinheit 32 durch kurzzeitige Unterbrechung der Energieversorgungsleitungen 34,36 und 38, wobei die Dauer der Unterbrechung einer Binärcodierung und damit entweder Binär 1 oder Binär 0 entspricht. Auf diese Weise sendet die zentrale Ansteuereinheit 32 also Daten-Frames aus, und zwar sequentiell an die beiden Navigationsleuchteinheiten 22, die beiden Navigationsleuchteinheiten 24 und die beiden Navigationsleuchteinheiten 26. Jede Navigationsleuchteinheit weist eine Steuereinheit 42,44,46 und eine dieser jeweils nachgeschaltete Navigationsleuchte 48,50,52 auf, mit der wahlweise sichtbares Licht oder IR-Licht ausgesendet werden kann.

Wie bereits zuvor erwähnt, steuert die zentrale Ansteuereinheit 32 die einzelnen Paare von Navigationsleuchteinheiten 22,24,26 sequentiell an, wobei die Ansteuerungssequenz selbst wiederum wiederholt ausgesendet wird, auch wenn der Betriebsmodus beibehalten bleibt. Diese zeitlich verzögerte Ansteuerung der einzelnen Paare von Navigationsleuchteinheiten 22,24,26 würde bedeuten, dass auch die zugehörigen Navigationsleuchten 48,50,52 sequentiell aufeinanderfolgend eingeschaltet würden. Dies ist unerwünscht, da sämtliche Navigationsleuchten gleichzeitig initiiert und aufleuchten sollen. Daher ist bei dem erfindungsgemäßen Konzept vorgesehen, dass die Ansteuerung der einzelnen Navigationsleuchten derart zeitverzögert erfolgt, dass erst nach dem Empfang des Ansteuersignals der zentralen Ansteuereinheit 32 durch die letzte in der Sequenz angesteuerte Navigationsleuchteinheit sämtliche Navigationsleuchten ihre Strahlung abgeben. Hierzu weist jede Steuereinheit 42,44,46 ein Zeitverzögerungsglied 54,56,58 auf. Da die Reihenfolge, in der die einzelnen Navigationsleuchteinheiten angesteuert werden, festgelegt ist, "weiß" jede Navigationsleuchteinheit, zu welchem Zeitpunkt sie innerhalb der Ansteuerungssequenz angesteuert wird. Damit kann in jeder Steuereinheit eine Zeitverzögerung abgelegt werden (nämlich in dem der Steuereinheit zugeordneten Zeitverzögerungsglied), die so gewählt ist, dass sämtliche Navigationsleuchten trotz sequentieller zeitlich versetzter Ansteuerung gleichzeitig aufleuchten.

Durch diese zeitlich versetzte Ansteuerung der einzelnen Navigationsleuchteinheiten 22,24,26 wird insbesondere bei einem zur Ansteuerung der Navigationsleuchten verwendeten Energieversorgungsnetz, bei dem die Außenhaut des Flugzeuges 10 als Masse dient, erreicht, dass die elektromagnetische Störempfindlichkeit und gegebenenfalls erzeugte elektromagnetische Störung deutlich reduziert ist, was weitere Schutzmaßnahmen weniger aufwendig erscheinen lässt.

Die Codierung der Betriebsmodi erfolgt, wie zuvor beschrieben, durch kurzzeitige Unterbrechung der Energieversorgung. Da diese Codierung auch während des Betriebs der Navigationsleuchten immer wieder sequentiell ausgesendet wird, bedarf es der Sicherstellung der Energieversorgung der Navigationsleuchten während der kurzzeitigen Unterbrechungen. Hierzu dient ein Energiespeicher 60,62,64 (beispielsweise in Form von Kondensatoren o.dgl.) in den einzelnen Navigationsleuchteinheiten 22,24,26.

## Patentansprüche

1. Navigationsbeleuchtungsvorrichtung für ein Luftfahrzeug, insbesondere Militär-Luftfahrzeug und vorzugsweise Militärflugzeug, mit
- mehreren Navigationsleuchteinheiten (22,24,26) mit Navigationsleuchten (48,50,52),
- einer Energieversorgungseinheit (28) für die Navigationsleuchteinheiten (22,24,26) und
- einer zentralen Ansteuereinheit (32) zur Ansteuerung der Navigationsleuchteinheiten (22,24,26) in jeweils einem von mehreren Betriebsmodi,
- wobei jede Navigationsleuchteinheit (22,24,26) eine mit der Ansteuereinheit (32) verbundene Steuereinheit (42,44,46) zur Ansteuerung ihrer Navigationsleuchte (48,50,52) in dem durch die zentrale Ansteuereinheit (32) vorgegebenen Betriebsmodus aufweist,
**dadurch gekennzeichnet,**
- **dass** die Navigationsleuchteinheiten (22,24,26) für den Betrieb in einem Betriebsmodus von der Ansteuereinheit (32) in einer vorgegebenen Reihenfolge sequentiell und damit mit Zeitversatz ansteuerbar sind,
- **dass** die Steuereinheiten (42,44,46) der Navigationsleuchteinheiten (22,24,26) Zeitverzögerungsglieder (54,56,58) zur- zeitlichen Verzögerung der Ansteuerung der Navigationsleuchten (48,50,52) auf den Empfang eines Ansteuersignal der zentralen Ansteuereinheit (32) aufweisen und
- **dass** die Zeitverzögerungsglieder (54,56,58) der Steuereinheiten (42,44,46) der Navigationsleuchteinheiten (22,24,26) derart eingestellt sind, dass die Navigationsleuchten (48,50,52) sämtlicher Navigationsleuchteinheiten (22,24,26) von deren Steuereinheiten (42,44,46) trotz eines zeitlich versetzten Empfangs der Ansteuersignale der zentralen Ansteuereinheit (32) gleichzeitig ansteuerbar sind.

2. Navigationsbeleuchtungsvorrichtung nach Anspruch 1, **dadurch gekennzeichnet, dass** die Navigationsleuchteinheiten (22,24,26) in mehrere Gruppen von jeweils mindestens zwei Navigationsleuchteinheiten (22,24,26) unterteilt sind und dass die Gruppen von Navigationsleuchteinheiten (22,24,26) in der vorgegebenen Reihenfolge sequentiell und damit zeitlich versetzt von der zentralen Ansteuereinheit (32) ansteuerbar sind.

3. Navigationsbeleuchtungsvorrichtung nach Anspruch 1 oder 2, **dadurch gekennzeichnet, dass** die Zeitdifferenz zwischen den mit den Zeitverzögerungsgliedern (54,56,58) der Steuereinheiten (42,44,46) jeweils zweier Navigationsleuchteinheiten (22,24,26) eingestellten Zeitverzögerungen gleich dem Zeitversatz zwischen den Zeitpunkten der Ansteuerung der Steuereinheiten (42,44,46) der zwei betreffenden Navigationsleuchteinheiten (22,24,26) durch die zentrale Ansteuereinheit (32) ist.

4. Navigationsbeleuchtungsvorrichtung nach einem der Ansprüche 1 bis 3, **dadurch gekennzeichnet, dass** die zentrale Ansteuereinheit (32) die Ansteuersignale an die Navigationsleuchteinheit (22,24,26) über sich zwischen diesen und der Energieversorgungseinheit (28) erstreckenden Energieversorgungsleitungen (30,34,36,38) sendet.

5. Navigationsbeleuchtungsvorrichtung nach Anspruch 4, **dadurch gekennzeichnet, dass** die Ansteuersignale der zentralen Ansteuereinheit (32) zur Codierung Binärdaten umfassen, die durch kurzzeitige Unterbrechung der Energieversorgungsleitung (34,36,38) einer Navigationsleuchteinheit (22,24,26) erzeugbar sind, wobei die Dauer der Unterbrechung den Binärzustand angibt, und dass die Navigationsleuchteinheiten (22,24,26) Energiespeicher (60,62,64) zur Versorgung ihrer Navigationsleuchten (48,50,52) während der Unterbrechung der Energieversorgung aufweisen.

6. Navigationsbeleuchtungsvorrichtung nach einem der Ansprüche 1 bis 5, **dadurch gekennzeichnet, dass** die zentrale Ansteuereinheit (32) für die Ansteuerung der Steuereinheiten (42,44,46) der Navigationsleuchteinheiten (22,24,26) während der gesamten Dauer des Betriebs der Navigationsleuchteinheiten (22,24,26) in denselben Betriebsmodus wiederholt die Navigationsleuchteinheiten (22,24,26) sequentiell ansteuert.

7. Navigationsbeleuchtungsvorrichtung nach Anspruch 6, **dadurch gekennzeichnet, dass** dann, wenn die Steuereinheit (42,44,46) einer Navigationsleuchteinheit (22,24,26) für eine vorgebbare Zeitspanne einen gültigen Code in den Ansteuersignalen der zentralen Ansteuereinheit (32) nicht erkennt, die betreffende Navigationsleuchteinheit (22,24,26) von der Steuereinheit (42,44,46) in dem dem zuletzt erkannten Code entsprechenden Betriebsmodus arbeitet.

8. Navigationsbeleuchtungsvorrichtung nach einem der Ansprüche 1 bis 7, **dadurch gekennzeichnet, dass** die Energieversorgungseinheit (28) mit jeder Navigationsleuchteinheit (22,24,26) über zwei elektrische Leiter (30,34,36,38) verbunden ist, wobei einer dieser Leiter (30,34,36,38) für sämtliche Navigationsleuchteinheiten (22,24,26) von einem metallischen Gehäuse eines Luftfahrzeuges gebildet ist.

9. Luftfahrzeug, insbesondere Militär-Luftfahrzeug und vorzugsweise Militärflugzeug, mit
- einem metallischen Gehäuse (12,14,16,18) und
- einer Navigationsbeleuchtungsvorrichtung nach einem der vorhergehenden Ansprüche,
- wobei die Navigationsleuchteinheiten (22,24,26) an dem Gehäuse (12,14,16,18) angeordnet sind.

## Claims

1. Navigation lighting device for an aircraft, in particular a military aircraft and preferably a fighter aircraft, comprising
a plurality of navigation light units (22, 24, 26) with navigation lights (48, 50, 52),
a power supply unit (28) for the navigation light units (22, 24, 26), and
a central actuation unit (32) for the actuation of the navigation light units (22, 24, 26) in a respective one of several modes of operation,
wherein each navigation light unit (22, 24, 26) comprises a control unit (42, 44, 46) connected to the actuation unit (32) for the actuation of its navigation light (48, 50, 52) in the operation mode predetermined by the central actuation unit (32),
**characterized in that**
the navigation light units (22, 24, 26) for operation in a mode of operation can be actuated by the actuation unit (32) sequentially in a predetermined sequence and thus with a time offset,
the control units (42, 44, 46) of the navigation light units (22, 24, 26) comprise time-delay elements (54, 56, 58) for the temporal delay of the actuation of the navigation lights (48, 50, 52) upon the receipt of an actuation signal of the central actuation unit (32), and
the time-delay elements (54, 56, 58) of the control units (42, 44, 46) of the navigation light units (22, 24, 26) are set in such a manner that the navigation lights (48, 50, 52) of all the navigation light units (22, 24, 26) can be actuated by their control units (42, 44, 46) despite a temporally offset receipt of the actuation signals of the central actuation unit (32).

2. Navigation lighting device according to claim 1, **characterized in that** the navigation light units (22, 24, 26) are subdivided into several groups, each of at least two navigation light units (22, 24, 26), and that the groups of navigation light units (22, 24, 26) can be actuated by the central actuation unit (32) sequentially in a predetermined sequence and thus temporally offset.

3. Navigation lighting device according to claim 1 or 2, **characterized in that** the time difference between the time delays set by means of the time-delay elements (54, 56, 58) of the control units (42, 44, 46) of two respective navigation light units (22, 24, 26) is equal to the time offset between the times of the actuation of the control units (42, 44, 46) of the two navigation light units (22, 24, 26) in question by the central actuation unit (32).

4. Navigation lighting device according to one of claims 1 to 3, **characterized in that** the central actuation unit (32) sends the actuation signals to the navigation light unit (22, 24, 26) via power supply lines (30, 34, 36, 38) extending between the navigation light units and the power supply unit (28).

5. Navigation lighting device according to claim 4, **characterized in that** the actuation signals of the central actuation unit (32) include binary data for coding, where said binary data can be generated by short-term interruption of the power supply line (34, 36, 38) of a navigation light unit (22, 24, 26), where the duration of the interruption specifies the binary status, and that the navigation light units (22, 24, 26) comprise energy storage devices (60, 62, 64) for the supply of their navigation lights (48, 50, 52) during the interruption of the power supply.

6. Navigation lighting device according to one of claims 1 to 5, **characterized in that** the actuation of the control units (42, 44, 46) of the navigation light units (22, 24, 26) the central actuation unit (32) repeatedly sequentially actuates the navigation lighting units (22, 24, 26) during the entire period of operation of the navigation light units (22, 24, 26) in the same mode of operation.

7. Navigation lighting device according to claim 6, **characterized in that** the control unit (42, 44, 46) of a navigation light unit (22, 24, 26) does not recognize, for a time period which can be predetermined, a valid code in the actuation signals of the central actuation unit (32), the navigation light unit in question (22, 24, 26) operates from the control unit (42, 44, 46) in the operation mode corresponding to the code last recognized.

8. Navigation lighting device according to one of claims 1 to 7, **characterized in that** the power supply unit (28) is connected to each navigation light unit (22, 24, 26) via two electrical conductors (30, 34, 36, 38), where one of these conductors (30, 34, 36, 38) is formed for all the navigation light units (22, 24, 26) by a metallic housing of an aircraft.

9. Aircraft, in particular a military aircraft and preferably a fighter aircraft comprising
a metallic housing (12, 14, 16, 18); and
a navigation lighting device of one of the preceding claims,
the navigation light units (22, 24, 26) are provided on said housing (12, 14, 16, 18).

## Revendications

1. Dispositif d'éclairage de navigation pour aéronef, en particulier un aéronef militaire et de préférence un avion militaire, comprenant
plusieurs unités d'éclairage de navigation (22, 24, 26) avec des lampes de navigation (48, 50, 52);
une unité d'alimentation en énergie (28) pour les unités d'éclairage de navigation (22, 24, 26) et
une unité centrale de commande (32) pour commander les unités d'éclairage de navigation (22, 24, 26) dans un de plusieurs modes d'opération, respectivement,
chaque unité d'éclairage de navigation (22, 24, 26) comprenant une unité de contrôle (42, 44, 46) connectée à ladite unité de commande (32) pour commander sa lampe de navigation (48, 50, 52) dans le mode d'opération prédéterminé par ladite unité centrale de commande (32),
**caractérisé en ce que**
pour l'opération dans un mode d'opération, les unités d'éclairage de navigation (22, 24, 26) sont aptes à être commandées séquentiellement par ladite unité de commande (32) dans un ordre prédéterminée, et ainsi avec un décalage temporel,
lesdites unités de contrôle (42, 44, 46) desdites unités d'éclairage de navigation (22, 24, 26) comprennent des éléments de décalage temporel (54, 56, 58) pour le décalage temporel de la commande des lampes de navigation (48, 50, 52) lors de la réception d'un signal de commande à partir de ladite unité centrale de commande (32), et
lesdits éléments de décalage temporel (54, 56, 58) desdites unités de contrôle (42, 44, 46) desdites unités d'éclairage de navigation (22, 24, 26) sont ajustées de sorte que les lampes de navigation (48, 50, 52) de toutes unités d'éclairage de navigation (22, 24, 26) peuvent être commandées simultanément par leurs unités de contrôle (42, 44, 46) malgré la réception décalée des signaux de commande à partir de ladite unité centrale de commande (32).

2. Dispositif d'éclairage de navigation selon la revendication 1, **caractérisé en ce que** les unités d'éclairage de navigation (22, 24, 26) sont divisées en plusieurs groupes respectivement comprenant au moins deux unités d'éclairage de navigation (22, 24, 26), et que les groupes des unités d'éclairage de navigation (22, 24, 26) sont aptes à être commandées ladite unité centrale de commande (32) dans la séquence prédéterminée et, pour cela, avec un décalage temporel.

3. Dispositif d'éclairage de navigation selon les revendications 1 ou 2, **caractérisé en ce que** la différence temporelle entre les décalages temporels ajustés avec les éléments de décalage temporel (54, 56, 58) des unités de contrôle (42, 44, 46) de deux unités d'éclairage de navigation (22, 24, 26) respectives est égale au décalage temporel entre les moments de commande des unités de contrôle (42, 44, 46) desdites deux unités d'éclairage de navigation (22, 24, 26) respectives par ladite unité centrale de commande (32).

4. Dispositif d'éclairage de navigation selon l'une quelconque des revendications 1 à 3, **caractérisé en ce que** ladite unité centrale de commande (32) transmet les signaux de commande à l'unité d'éclairage de navigation (22, 24, 26) sur des lignes d'alimentation en énergie (30, 34, 36, 38) s'étendant entre celle-ci et ladite unité d'alimentation en énergie (28).

5. Dispositif d'éclairage de navigation selon la revendication 4, **caractérisé en ce que** les signaux de commande de ladite unité centrale de commande (32) comprennent des données binaires pour codage, qui peuvent être générées par des interruptions courtes de la ligne d'alimentation en énergie (34, 36, 38) d'une unité d'éclairage de navigation (22, 24, 26), et que les unités d'éclairage de navigation (22, 24, 26) comprennent des accumulateurs d'énergie (60, 62, 64) pour l'alimentation de leurs lampes de navigation (48, 50, 52) pendant l'interruption de l'alimentation en énergie.

6. Dispositif d'éclairage de navigation selon l'une quelconque des revendications 1 à 5, **caractérisé en ce que** ladite unité centrale de commande (32) séquentiellement commande, de façon répétée, lesdites unités d'éclairage de navigation (22, 24, 26) afin de commander les unités de contrôle (42, 44, 46) desdites unités d'éclairage de navigation (22, 24, 26) dans le même mode d'opération pendant l'opération totale desdites unités d'éclairage de navigation (22, 24, 26).

7. Dispositif d'éclairage de navigation selon la revendication 6, **caractérisé en ce que**, si ladite unité de contrôle (42, 44, 46) d'une unité d'éclairage de navigation (22, 24, 26) ne reconnait pas un code valide dans les signaux de commande de ladite unité centrale de commande (32) pendant une durée définissable, l'unité d'éclairage de navigation (22, 24, 26) respective fonctionne dans le mode d'opération correspondant au dernier code reconnu par ladite unité de contrôle (42, 44, 46).

8. Dispositif d'éclairage de navigation selon l'une quelconque des revendications 1 à 7, **caractérisé en ce que** ladite unité d'alimentation en énergie (28) est liée à chaque unité d'éclairage de navigation (22, 24, 26) par deux conducteurs électriques (30, 34, 36, 38), un de ces conducteurs (30, 34, 36, 38) étant formé pour toutes les unités d'éclairage de navigation (22, 24, 26) par un boitier métallique d'un aéronef.

9. Aéronef, en particulier un aéronef militaire et de préférence un avion militaire, comprenant
un boitier métallique (12, 14, 16, 18), et
un dispositif d'éclairage de navigation selon l'une quelconque des revendications précédentes,
lesdites unités d'éclairage de navigation (22, 24, 26) étant prévues sur ledit boitier (12, 14, 16, 18).
